# EUROPEAN PATENT SPECIFICATION

(11) **EP 2 871 249 B1**
(45) Date of publication and mention of the grant of the patent: **16.08.2017**
(21) Application number: 13813540.5
(22) Date of filing: 28.06.2013
(51) Int. Cl.: C22B 5/06, C01G 49/08, C21B 13/00, C22B 5/10

(54) **METHOD FOR PRODUCING REDUCTION PRODUCT**
VERFAHREN ZUR HERSTELLUNG EINES REDUKTIONSPRODUKTS
PROCÉDÉ DE FABRICATION D'UN PRODUIT DE RÉDUCTION

(30) Priority: 05.07.2012 JP 2012151460
(43) Date of publication of application: 13.05.2015
(73) Proprietor: Kabushiki Kaisha Kobe Seiko Sho (Kobe Steel, Ltd.), Kobe-shi, Hyogo 651-8585 (JP)
(72) Inventor: HAMAGUCHI, Maki, Takasago-shi, Hyogo 676-8670 (JP); OKUYAMA, Noriyuki, Takasago-shi, Hyogo 676-8670 (JP); SAKAI, Koji, Takasago-shi, Hyogo 676-8670 (JP); SHISHIDO, Takahiro, Takasago-shi, Hyogo 676-8670 (JP); MATSUI, Yoshiyuki, Kobe-shi, Hyogo 651-2271 (JP); AOKI, Hideyuki, Sendai-shi Miyagi 980-8577 (JP); SAITO, Yasuhiro, Sendai-shi Miyagi 980-8577 (JP); UCHIDA, Ataru, Sendai-shi Miyagi 980-8577 (JP); YAMAZAKI, Yoshiaki, Sendai-shi Miyagi 980-8577 (JP); KANAI, Tetsuya, Sendai-shi Miyagi 980-8577 (JP)
(74) Representative: Müller-Boré & Partner Patentanwälte PartG mbB
(86) International application number: PCT/JP2013/067884
(87) International publication number: WO 2014/007174

(56) References cited:
- WO-A1-2010/023691
- JP-A- H09 256 017
- JP-A- 2012 062 505
- US-A- 4 549 904

## Description

The present invention relates to a method for producing a reduced substance in which an oxide is at least partially reduced by using an organic compound while the organic compound and the oxide are heated. The reduction technique according to the present invention can be used in both the field of ferrous metallurgy, in which iron oxides are reduced, and in the field of nonferrous metallurgy, in which oxides of nonferrous metals are reduced. Although the following description is centered on iron oxides, it does not imply that the present invention is limited to iron oxides.

A blast furnace process, a smelting-reduction process, and a direct-reduction ironmaking process have been developed in order to produce reduced substances such as metallic iron by reducing iron oxides such as iron ore by using a carbonaceous material such as coal. Among these processes, a direct-reduction ironmaking process, in which agglomerates (carbon-composite iron ore; also referred to as carbon-composite pellets, carbon-composite briquettes, etc.) formed of a mixture including iron ore and a carbonaceous material are used, allows a reduction reaction to proceed at high speeds, even though the temperature of the process is not as high as the temperatures at which a blast furnace and a smelting-reduction furnace are operated.

Recently, there have been proposed methods for improving the state of the bond between an iron oxide and a carbonaceous material in order to facilitate reduction of the iron oxide. For example, PTL 1 discloses a method in which an ore is treated using bound water contained in the ore, such as crystal water, so that an oxide included in the ore is easily reduced in order to improve a low-quality ore containing bound water. Specifically, an ore containing bound water is heated to remove the bound water in the form of water vapor. This creates pores having a diameter in the order of nanometers in the surface of the ore. The resulting porous ore is brought into contact with an organic liquid (e.g., coal tar) including an organic compound whose molecules are smaller than the pores by one order of magnitude, that is, a sub-nanometer-scale organic compound, or with an organic gas including a vaporized organic compound such as tar. Thus, the organic compound is adhered onto the surface of the porous ore in which pores having a diameter in the order of nanometers are formed. It is described in PTL 1 that the porous ore to which an organic compound such as tar is adhered is heated at a temperature of 500°C or more, and this induces a reduction reaction between an oxide included in the ore and a carbonaceous material included in the organic compound, which are brought into intimate contact with each other, which in turn facilitates reduction of the oxide.

### Patent Literature

PTL 1: Japanese Patent No. 4206419

WO 2010/023691 A1 discloses a method for processing high zinc iron ores for production of iron and steel, comprising the steps of: producing agglomerates comprising a mixture of iron oxides, carbonaceous materials, and fluxes; dezincificating and metallising the agglomerates; smelting the reduced agglomerates; and recovering zinc values from waste gas stream.

US 4,549,904 discloses a process for the preparation of pellets, which comprises mixing an iron ore raw material with a pitch material having a softening point of 30°C to 300°C in an amount in the range of 0.5 to 5% by weight of the iron ore raw material, molding the mixture, and heating the molded material under a reducing atmosphere to remove arsenic contained therein.

An object of the present invention is to provide a novel oxide-reducing technique that allows the reduction reaction of an oxide to proceed at a lower temperature and achieves high energy efficiency and enhanced productivity.

In order to achieve the above-described object, the present invention provides a method for producing a reduced substance in which an oxide is at least partially reduced while an organic compound and the oxide are heated. The method includes a reduction step in which the organic compound is brought into contact with the oxide when the organic compound is in a molten state,
wherein the organic compound is a carbonaceous reductant which includes at least one substance selected from a solvent extract of coal,
wherein the organic compound changes to a molten state at less than 500°C, wherein the amount of the organic compound is 25 to 1000 parts by mass relative to 100 parts by mass of the oxide, and
wherein the reduction reaction occurs in a temperature range of more than 300°C to 400°C.

In a preferred embodiment of the present invention, the above-described method further includes another reduction step subsequent to the above-described reduction step. The other reduction step includes heating to 400°C or more.

According to the present invention, an organic compound in a molten state is brought into contact with an oxide in order to reduce the oxide. Thus, a reduction technique that achieves high energy efficiency and enhanced productivity can be provided.
[Fig. 1] Fig. 1 is a graph illustrating a Gieseler flow curve of an upgraded coal used in Example 1.
[Fig. 2] Fig. 2 is a graph illustrating a Gieseler flow curve of coal.
[Fig. 3] Fig. 3 is a graph illustrating the results of an XRD analysis of a pellet prepared from a mixture of an iron oxide powder and an upgraded coal powder which was conducted in Example 1 after the pellet was heated at 300°C.
[Fig. 4] Fig. 4 is a graph illustrating the results of an XRD analysis of a pellet prepared from a mixture of an iron oxide powder and an upgraded coal powder which was conducted in Example 1 after the pellet was heated at 400°C.

The inventors of the present invention have conducted detailed studies on the reduction reaction of iron ore by using a carbonaceous material and found that, when a carbonaceous material in a molten state is brought into contact with iron ore, the reduction reaction of the iron ore is induced by hydrogen included in the carbonaceous material at regions at which the molten carbonaceous material and the iron ore are in contact with each other. Since this reduction reaction is induced because a carbonaceous material is brought into contact with iron ore when the carbonaceous material is in a liquid state, this reduction reaction is considered to be a liquid-phase reduction in contradistinction to smelting reduction of the related art (details are described below). In addition, compared with PTL 1 described above, the above-described reduction reaction proceeds in a low temperature range, which is of more than 300°C to 400°C, which promotes the reduction of iron ore and markedly improves energy efficiency and the cost. As described below, the above-described reduction reaction proceeds due to the reaction of hydrogen included in an organic compound that is in a molten state with an oxide that are brought into direct contact with each other. Therefore, the above-described reduction reaction can be employed for reducing not only iron oxides such as iron ore, but also oxides of nonferrous metals, such as zinc oxide and ilmenite (titanium ore). That is, it was found that the above-described reduction reaction may be applied not only in the field of ferrous metallurgy, but also in the field of nonferrous metallurgy. Thus, the present invention has been made.

Specifically, the method for producing a reduced substance according to the present invention is a method for producing a reduced substance in which an oxide is at least partially reduced while an organic compound and the oxide are heated. The method includes a reduction step in which the organic compound is brought into contact with the oxide when the organic compound is in a molten state.

The term "reduced substance" used herein refers not only to a reduced substance that has been completely reduced, but also to a partially reduced substance. For example, when the oxide is an iron oxide, the term "iron oxide" refers not only to metallic iron that has been completely reduced, but also to partially reduced iron such as magnetite or wustite.

The term "organic compound" used herein refers to a carbonaceous reducing material that serves as a material for reducing an oxide. Specifically, the organic compound is an organic compound that changes to a molten state at less than 500°C and that, when the organic compound is in a molten state and brought into contact with an oxide, generates hydrogen and thereby reduces the oxide (detailed reaction mechanism is described below). In order to induce the reduction reaction according to the present invention, it is essential that an organic compound be in a molten state when being in contact with an oxide. If the organic compound solidifies before it changes to a liquid phase, the above-described reduction reaction does not proceed.

The temperature at which an organic compound changes to a molten state may be measured by an appropriate method depending on the type of the organic compound. For example, when the organic compound is coal, the temperature may be measured using a Gieseler plastometer. When the organic compound is a pitch, the temperature may be measured using a hot-stage (heater) optical microscope.

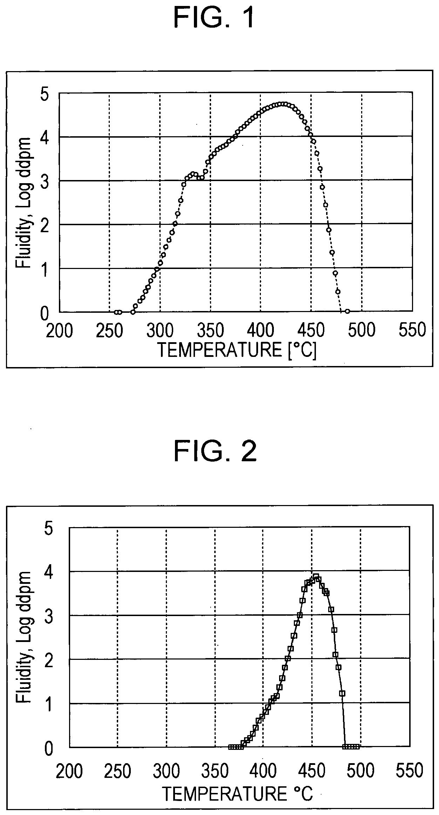

Fig. 1 illustrates the Gieseler flow curve of the upgraded coal (changes to a molten state at about 270°C to about 280°C) used in Example 1 below. As illustrated in Fig. 1, this upgraded coal starts melting at about 260°C, has the maximum fluidity around about 430°C, and solidifies at about 475°C.

For reference, Fig. 2 illustrates the Gieseler flow curve of a coal (a type of semi-caking coal) whose maximum fluidity is close to that of the upgraded coal used in Example 1. As illustrated in Fig. 2, this coal starts melting at about 360°C, has the maximum fluidity around about 450°C, and solidifies at about 475°C. Thus, it is considered that the above-described reduction reaction may proceed using such a coal having high fluidity (e.g., coal that changes to a molten state at less than 500°C) instead of the upgraded coal. On the other hand, the above-described reduction reaction does not proceed using a coal having low fluidity (e.g., coal that does not change to a molten state at less than 500°C).

Examples of the organic compound used in the present invention include high-fluidity coal, various polymeric materials, and oils such as heavy oil and heavy crude oil that are produced in a petroleum-refinery process. An organic compound that changes to a molten state at less than 500°C and has high fluidity (e.g., high-fluidity coal) is used according to the present invention. It is considered that, the higher the fluidity of an organic compound, the higher the efficiency with which the organic compound is brought into contact with an oxide. Therefore, an organic compound having high fluidity advantageously lowers the reduction temperature. At least one substance selected from a solvent extract of coal such as an upgraded coal referred to as hyper coal, which is a solvent extract of coal having a low ash content of 3% or less, is used according to the present invention. The ash content in the upgraded coal, which includes ashless coal, is generally 3% or less and is preferably 1% or less. Furthermore, the upgraded coal is not expensive and has high fluidity (changes to a molten state at about 200°C to about 500°C). Therefore, the upgraded coal may be advantageously used as a reducing material for inducing the above-described reduction reaction. The type of the upgraded coal used in the present invention and a method for producing the upgraded coal are not particularly limited, and various literatures related to upgraded coals [e.g., an upgraded coal referred to as "hyper coal" in R&D Kobe Steel Engineering Reports/Vol. 56, No. 2, p. 15-22 (Aug. 2006)] may be referred to.

Use of the above-described upgraded coal may produce, for example, the following effects.

The upgraded coal has high fluidity and high expansibility. This may suppress, for example, in carbonization of a coal-iron ore complex (e.g., ferrocoke), a reduction in the strength of a carbon-including iron ore which occurs due to insufficient adhesion between coal particles or loss of coal matrix which is caused by addition of iron ore. As a result, the interface between the iron ore and the coal is maintained in a good adhesion, which allows the carbon-including iron ore to be charged in a sintering furnace or a smelting-reduction furnace having an oxidizing atmosphere, despite being considered impossible.

Since the above-described upgraded coal has above-described characteristics (high fluidity and high expandability), the number of large or flat pores is reduced compared with the case where only coal is carbonized into coke, which increases the strength of the coke. This suppresses a reduction in strength, which has been considered as a disadvantage of partially reduced ore. As a result, the amount of the partially reduced ore charged in a shaft furnace may be increased.

Taking advantage of its high fluidity, the above-described upgraded coal has been widely used as a binder for enhancing the adhesion between coal and iron ore. For example, in ferrocoke, the upgraded coal has been used as a binder for coal, which makes up about 90% of ferrocoke on a volume basis. The upgraded coal included in ferrocoke is bound by coal and not able to move. Therefore, the upgraded coal and the iron ore are virtually not brought into contact with each other (there is little likelihood that the iron ore and the upgraded coal are brought into contact with each other). That is, the upgraded coal included in the ferrocoke is not in sufficient contact with iron ore while being in a molten state, but solidifies before it is brought into contact with iron ore while being in a molten state. On the other hand, in the present invention, the upgraded coal is used not as a binder for the coal particles but as a reducing material and therefore brought into contact with iron ore when being in a molten state. In this regard, the reduction method according to the present invention differs from those of the related art.

As a technique related to the above-described upgraded coal, Japanese Unexamined Patent Application Publication No. 2004-307714 discloses a technique for improving a low grade coal such as a high-volatile-content coal to produce a metallurgical upgraded coal having markedly high fluidity. Specifically, in the above patent application publication, it is described that the fluidity of a low grade coal may be improved by performing direct extraction of the low grade coal by using an organic solvent including a bicyclic aromatic compound having a structural unit that is closely analogous to that of coal at an extraction temperature (heating temperature) of 250°C to 420°C, which is considerably lower than the coal carbonization temperatures of the related art. However, in the above patent application publication, the upgraded coal having an improved fluidity is also just simply used as a binder for increasing strength. Furthermore, it is described that, an oxide-reducing process proceeds between solid carbon and a solid oxide similarly to the related art. In these regards, the reduction method disclosed in the above patent application publication also differs from that according to the present invention.

The above-described organic compounds may be used alone or in combination of two or more. For example, a mixture of coal (preferably, high-fluidity coal) and the above-described upgraded coal may be used. The mixing ratio is not particularly limited but is preferably a mixing ratio at which the resulting mixture changes to a molten state at preferably less than 500°C.

The term "oxide" used herein refers to a substance that includes oxygen and is capable of being reduced using the above-described organic compound. The term "oxide" refers to both iron oxides and oxides of nonferrous metals.

Examples of the oxides of nonferrous metals used in the present invention include zinc oxide, titanium oxide such as ilmenite (titanium ore), magnesium oxide, lead oxide, and silicon dioxide.

The above-described oxide may be a partially reduced oxide (e.g., magnetite) produced by the above-described reduction method according to the present invention. When the partially reduced oxide has a catalytic effect, the catalytic effect promotes a hydrogen radical reaction induced due to dehydrogenation of an organic compound, which is described below in detail, and consequently reduction of the oxide is also promoted.

The mechanism of the reduction reaction according to the present invention is described below taking an upgraded coal (ash concentration was 3% or less) used in Example 1 below as an example. The upgraded coal used in the test was an upgraded coal that changes to a molten state at about 270°C to about 280°C and that starts undergoing dehydrogenation polycondensation above the temperature range to form active hydrogen radicals. When an oxide [in Example 1, iron oxide (hematite)] is present in the close vicinity of such an upgraded coal, the hydrogen radicals derived from the upgraded coal remove oxygen from the oxide and thereby reduce the oxide [when the oxide is iron oxide (hematite), the iron oxide is reduced to magnetite]. At the same time, water is generated.

As described above, the oxide-reducing reaction according to the present invention is induced by removal of oxygen from an oxide which is caused due to generation of hydrogen radicals derived from an organic compound that is in a molten state. From the viewpoint of an organic compound, this phenomenon leads to generation of water and carbonization (transition from a molten state to a solid state). In the above-described reduction reaction, a carbonization reaction due to the dehydrogenation polycondensation of an organic compound proceeds rapidly in a short time.

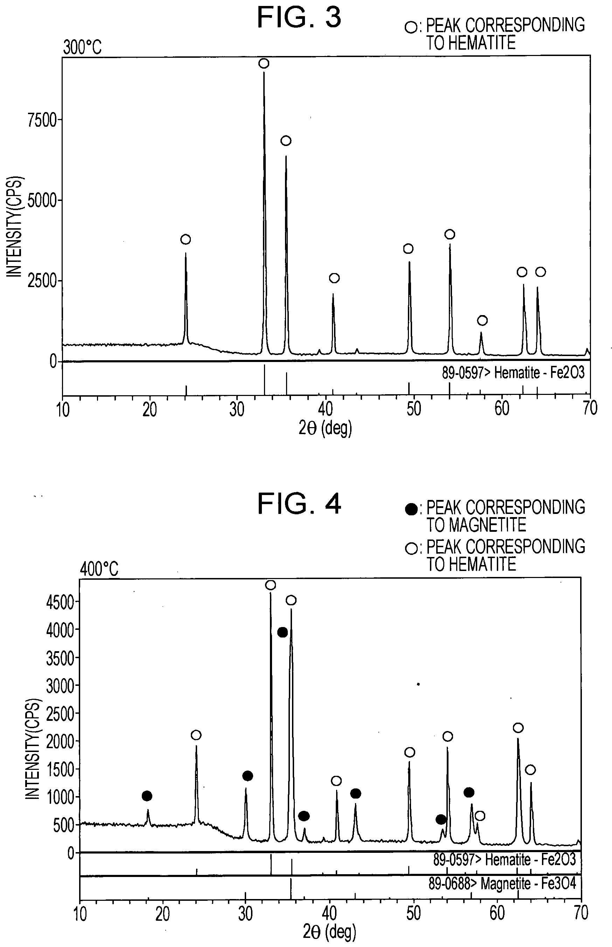

As illustrated in Figs. 3 and 4, the reduction reaction occurs in a temperature range of more than 300°C to 400°C. However, a reduction reaction proceeds in such an extremely low temperature range only when an organic compound that is in a molten state is in contact with an oxide. In other words, when the organic compound that is in a molten state is not in contact with (separated from) the oxide, hydrogen radicals generated on the organic-compound side just recombines with one another to form hydrogen molecules. Thus, reduction of an oxide induced by the hydrogen radicals never proceeds in an extremely low temperature range as described above.

The above-described reduction reaction is induced because, when an organic compound is brought into contact with an oxide (solid), the organic compound is in a molten state (liquid), but not in a solid state as in the related art (i.e., solids are brought into contact with each other). Therefore, a reaction in which an organic compound is brought into contact with an oxide when the organic compound is in a molten state in order to induce reduction may be referred to as "liquid-phase reduction".

A difference between the above-described liquid-phase reduction according to the present invention and smelting reduction used in the field of steelmaking is described below. In smelting reduction, a molten oxide such as iron ore in the form of FeO slag is reacted with carbon (C) included in an organic compound such as coal (carbon reduction). In this regard, the reaction mechanism of smelting reduction differs from that of the liquid-phase reduction, in which an organic compound such as coal is molten and hydrogen included in the organic compound is reacted with oxygen (O) included in an oxide such as iron ore to reduce the oxide (hydrogen reduction). Furthermore, the liquid-phase reduction proceeds only when an organic compound in a molten state and an oxide are brought into contact with each other. In this regard, the reaction mode of the liquid-phase reduction differs from that of smelting reduction, which proceeds when an organic compound in a solid state is brought into contact with an oxide that is in a solid state. A comparison between the temperatures required for the two reduction reactions shows that the liquid-phase reduction proceeds at a temperature lower than that of carbon reduction. That is, a reduction reaction proceeds in an extremely low temperature range, which is the technical significance of the liquid-phase reduction according to the present invention.

Ore and a carbonaceous material are brought into contact with each other to induce reduction also in PTL 1 described above. However, in the technique disclosed in PTL 1, a nanoscale-porous ore prepared by thermal dehydration of a high-crystal-water-content ore is brought into contact with a sub-nanometer-scale tar smaller than the pores of the porous ore by one order of magnitude (reduction reaction is promoted by increasing the area of the contact surface by forming pores in the ore). In this regard, the mechanism of reduction induced when ore and a carbonaceous material are brought into contact with each other which is described in PTL 1 differs from that according to the present invention, in which the wettability of an organic compound with iron ore is improved using a high-fluidity carbonaceous material such as an upgraded coal.

In addition, according to the present invention, for example, means for pulverizing a carbonaceous material which is commonly employed for promoting reduction and additional means for, for example, recirculating tar in order to induce reduction may be advantageously omitted. Specifically, in the present invention, since an organic compound in a molten state is brought into contact with an oxide, reduction of the oxide proceeds efficiently even in a heating process at a relatively low temperature. Therefore, reduction of the oxide proceeds smoothly without causing an energy loss such as a temporary reduction in temperature during the reaction, which is markedly advantageous from the viewpoints of cost, productivity, etc. When an oxide is, for example, an iron oxide, the oxide is converted to hematite, magnetite, and finally metallic iron.

In the present invention, in order to facilitate the liquid-phase reduction induced by bringing an organic compound into contact with an oxide, it is effective to increase the mixing ratio of the organic compound to the oxide so that the organic compound serves as a reducing material for the oxide. According to the present invention, the lower limit of the amount of the organic compound is 25 parts by mass or more, is preferably 50 parts by mass or more, and is more preferably 100 parts by mass or more relative to 100 parts by mass of the oxide. The upper limit of the amount of the organic compound is 1000 parts by mass or less, is preferably 500 parts by mass or less, and is more preferably 300 parts by mass or less relative to 100 parts by mass of the oxide.

It is essential only that the organic compound is in a molten state when being in contact with an oxide. It is not necessary to use an organic compound that is already in a molten state at the beginning of the contact stage or at the raw-material stage. For example, a solid organic compound and a solid oxide used as raw materials may be brought into contact with each other in the form of solid and subsequently heated to be changed to a molten state. Alternatively, the organic compound may be molten before being brought into contact with a solid oxide, and the molten organic compound and the oxide may be brought into contact with each other. The former method may be recommended considering the above-described reduction mechanism according to the present invention in which hydrogen included in an organic compound is utilized effectively (undergoes a reaction immediately after being molten).

It is essential only that the method for producing a reduced substance according to the present invention includes the above-described reduction step. Specifically, further reduction, that is, carbon reduction, may proceed subsequent to the above-described reduction step (hydrogen reduction), which allows the reduced substance to be converted to metallic iron finally. In the present invention, since an organic compound in a molten state is brought into contact with an oxide, another reduction step of carbon reduction also proceeds subsequent to a reduction step of the above-described hydrogen reduction. In the reduction step of carbon reduction, heating is preferably performed. It is preferable to perform heating to a temperature or more at which the organic compound is brought into a molten state (starts exhibiting fluidity). When the above-described upgraded coal is used, it is preferable to perform heating to 400°C or more subsequent to the above-described reduction step (hydrogen reduction) and then the reduction step of carbon reduction.

The reduction technique according to the present invention may be employed in the fields of ferrous metallurgy and nonferrous metallurgy.

In the field of ferrous metallurgy, the technique according to the present invention may be employed in a blast furnace process and a direct-reduction ironmaking process in which iron ore and solid carbon are used (Matsui: Shin Seitetsu Process To Shin-Gijyutsu No Houga: The Iron and Steel Institute of Japan, 179th Nishiyama Memorial Seminar, 2003). In the technique according to the present invention, reduction reaction proceeds at a low temperature, which enhances energy efficiency and productivity.

For example, in a blast furnace process, the technique according to the present invention may be employed in the case where a grate pellet-firing furnace, a grate kiln, a shaft furnace, or a cupola furnace is used.

The technique according to the present invention may be suitably employed in a direct-reduction ironmaking process, with which high volume production is difficult to be realized compared with a blast furnace. Examples of the direct-reduction ironmaking process in which the technique according to the present invention may be employed include rotary hearth, a fixed-bed method, a fluidized-bed method, a rotary kiln method, or a rotary hearth method. There has also been disclosed a rotary hearth method in which carbon-composite iron ore is not used. A representative example of such a rotary hearth method is a COMET process. In a COMET process, finely powdered iron ore and a carbonaceous material are alternately deposited so as to each form two or three layers. Examples of a COMET process include a Hi-QIP (high quality iron pebble) method. The technique according to the present invention may be employed in the above-described method.

The method according to the present invention may be employed not only in the field of ferrous metallurgy described above, but also in the field of nonferrous metallurgy. The field of nonferrous metallurgy is broadly divided into following two subfields: reduction refining using carbon and metal-vaporization refining (Hi-Tetsu Kinzoku Seiren, Kouza Gendai No Kinzoku-Gaku, Seiren-Hen, Volume 2, The Japan Institute of Metals, 1980). The method according to the present invention may be employed in any of these subfields.

In the former subfield (reduction refining using carbon), examples of elements mainly constituting various ferroalloys used in a steelmaking process other than Fe include Si, Mn, Cr, and Ni, all of which forms a stable oxide. However, under the coexistence of the oxide and Fe, carbon reduces the oxide to an alloy of Fe at a high temperature. The method according to the present invention may be employed in such a field of refining in which carbon is used for reducing the stable oxide at a high temperature.

In the latter subfield, that is, the metal-vaporization reduction process in which a high vapor pressure is generated, most commonly, an oxide is reduced using a carbonaceous reductant and the resulting metal vapor is collected. A representative example of such a process is dry refining of zinc. Examples of metal that can be produced by reduction refining using a carbonaceous reductant include, other than Zn, Mg and Pb. In any case, the method according to the present invention can be employed.

The present invention is described further in detail below with reference to examples. However, the present invention is not limited to the examples below. Appropriate modifications can be made and are also included within the technical scope of the invention.

### EXAMPLE 1

An iron oxide [hematite (Fe₂O₃)] was used as an oxide. An upgraded coal (hyper-coal) was used as an organic compound. The upgraded coal used in the test was an upgraded coal that changes to a molten state at about 270°C to 280°C and was prepared in accordance with the method described in Example 1 of Japanese Unexamined Patent Application Publication No. 2009-144130.

A mixture including a powder of an iron oxide [an Fe₂O₃ reagent produced by Wako Pure Chemical Industries, Ltd.] and a hyper-coal powder at an weight ratio of 7:3 was filled in a 25-mmϕ die (loading weight: 15 g). The mixture was heated to 100°C, and subsequently formed into a tablet at a pressure of 2 ton/cm² to prepare an agglomerated substance.

The agglomerated substance was heated to 300°C or 400°C at a rate of temperature rise of 5°C/min under a stream of nitrogen. Subsequently, an XRD analysis was conducted. The observations of the conditions of the tablet that has been subjected to a heat treatment show that slight deformation occurred in the case where the agglomerated substance was heated to 300°C and significant deformation occurred to such an extent that the tablet no longer maintained its cylindrical shape in the case where the agglomerated substance was heated to 400°C. Thus, it was confirmed that the upgraded coal was melted in each case where the agglomerated substance was heated to 300°C or 400°C. The conditions for the XRD analysis were as follows.
Apparatus; RINT1500, an X-ray diffractometer produced by Rigaku Corporation Measurement conditions
Target; Cu
Monochromatization; a monochromator (Kα) was used
Target output; 40kV-200mA
Slit; divergence: 1°, scatter: 1°, receiving: 0.15 mm
Scanning speed; 2°/min.
Sampling width; 0.02°
Measurement range (2θ); 5° to 70°

Fig. 3 illustrates an XRD analysis chart of the tablet that had been heated to 300°C. As illustrated in Fig. 3, in the case where the heat treatment was performed to 300°C, only the peaks corresponding to hematite (Fe₂O₃) were observed and a peak corresponding to magnetite (Fe₃O₄) was not observed.

Fig. 4 illustrates an XRD analysis chart of the tablet that had been further heated to 400°C. As illustrated in Fig. 4, in the case where the heat treatment was performed to 400°C, the peaks corresponding to magnetite (Fe₃O₄) were clearly observed as well as the peaks corresponding to hematite (Fe₂O₃). The composition of the tablet determined from the areas of the peaks was as follows: 60% of hematite (Fe₂O₃) and 40% of magnetite (Fe₃O₄). This proves that, when the heating temperature is increased from 300°C (Fig. 3) to 400°C (Fig. 4), the reduction reaction from hematite to magnetite proceeds.

As described above, with reference to Figs. 3 and Fig. 4, it is considered that the reduction reaction starts in a temperature range of more than 300°C to 400°C. Although the detailed reason why a reduction reaction of an iron oxide proceeds in such a low temperature range is not clear, the following is considered to be one of the factors. When a mixture of an upgraded coal that changes to a molten state at about 270°C to about 280°C and an iron oxide is heated to the above-described temperature range, the molten upgraded coal surrounds the periphery of the iron oxide, which increases an efficiency with which the two substances are brought into contact with each other.

### REFERENCE TEST

The following test was conducted in order to provide a supporting fact to the hypothesis that the reduction reaction of an iron oxide performed in Example 1 above was induced by hydrogen included in the upgraded coal.

Specifically, in the above-described heating test in which the tablet was heated to 400°C, for each of an upgraded coal only and a mixture of an upgraded coal and an iron oxide, a change in hydrogen content and a change in the amount of water generated which occurred during the heat treatment were examined by a Karl-Fischer method. Note that, in the case where the mixture of an upgraded coal and an iron oxide was used, since the iron oxide causes hydrogen content to be reduced and a small amount of water to be generated, the values shown in Table 1 have been corrected on an upgraded coal basis in order to eliminate the effects of the iron oxide. Table 1 summarizes the results.

**[Table 1]**

| | | Hyper-coal only | Mixture of hyper-coal 70% + iron oxide 30% |
|---|---|---|---|
| Hydrogen content in Hyper-coal (wt%) | Before the heat treatment to 400°C | 5.9 | 5.9 |
| | After the heat treatment to 400°C | 5.4 | 5.2 |
| Amount of water generated while the temperature was increased to 400°C (wt%) | | 0.13 | 0.93 |
| (Hyper-coal basis) | | | |

The results of the test in which an upgraded coal was used alone are discussed below. The hydrogen content in the upgraded coal was 5.9wt% before the heat treatment but reduced to 5.4wt% after the heat treatment to 400°C (reduced by 5.9wt% - 5.4wt% = 0.5wt%). This is presumably mainly because of dehydrogenation polycondensation and a dealkylation reaction.

On the other hand, in the case where a mixture of an upgraded coal and an iron oxide was used, the hydrogen content in the mixture was reduced to 5.2wt% after the heating treatment to 400°C (reduced by 5.9wt% - 5.2wt% = 0.7wt%). This shows that, by mixing an iron oxide with an upgraded coal, a reduction in hydrogen content was increased from 0.5wt% to 0.7wt%, that is, by 40%, compared with the case where an upgraded coal was used alone without being mixed with an iron oxide.

The amount of water generated was increased with a reduction in hydrogen content. Specifically, while the amount of water generated was 0.13wt% in the case where an upgraded coal was used alone, the amount of water generated was markedly increased to 0.93wt% in the case where the upgraded coal was mixed with an iron oxide.

The above test results strongly support the above-described mechanism of the reduction reaction according to the present invention, in which hydrogen generated from an upgraded coal heated to 400°C is consumed by reduction of an iron oxide to magnetite and thereby forms water.

## Claims

1. A method for producing a reduced substance in which an oxide is at least partially reduced while an organic compound and the oxide are heated, the method comprising a reduction step in which the organic compound is brought into contact with the oxide when the organic compound is in a molten state, wherein the organic compound is a carbonaceous reductant which includes at least one substance selected from a solvent extract of coal,
wherein the organic compound changes to a molten state at less than 500°C, wherein the amount of the organic compound is 25 to 1000 parts by mass relative to 100 parts by mass of the oxide, and
wherein the reduction reaction occurs in a temperature range of more than 300°C to 400°C.

2. The method for producing a reduced substance according to Claim 1, the method further comprising another reduction step subsequent to the above-described reduction step, the other reduction step including heating to 400°C or more.

## Patentansprüche

1. Verfahren zur Herstellung einer reduzierten Substanz, worin ein Oxid mindestens teilweise reduziert wird, während eine organische Verbindung und das Oxid erwärmt werden, wobei das Verfahren einen Reduktionsschritt umfaßt, worin die organische Verbindung in Kontakt mit dem Oxid gebracht wird, wenn die organische Verbindung in einem geschmolzenen Zustand ist, wobei die organische Verbindung ein kohlenstoffhaltiges Reduktionsmittel ist, welches mindestens eine Substanz einschließt, ausgewählt aus einem Lösungsmittelextrakt von Kohle, wobei sich die organische Verbindung in einen geschmolzenen Zustand bei weniger als 500°C ändert, wobei die Menge der organischen Verbindung 25 bis 1000 Masse-Teile relativ zu 100 Masse-Teilen des Oxids beträgt, und wobei die Reduktionsreaktion in einem Temperaturbereich von mehr als 300°C bis 400°C stattfindet.

2. Verfahren zur Herstellung einer reduzierten Substanz gemäß Anspruch 1, twobei das Verfahren ferner einen weiteren Reduktionsschritt nachfolgend dem vorstehend beschriebenen Reduktionsschritt umfaßt, wobei der weitere Reduktionsschritt Erwärmen bis 400°C oder mehr einschließt.

## Revendications

1. Procédé de fabrication d'une substance réduite dans lequel un oxyde est au moins partiellement réduit pendant qu'un composé organique et l'oxyde sont chauffés, le procédé comprenant une étape de réduction dans laquelle le composé organique est amené au contact de l'oxyde quand le composé organique est dans un état fondu,
dans lequel le composé organique est un réducteur carboné qui comprend au moins une substance sélectionné un extrait de solvant de charbon,
dans lequel le composé organique passe à un état fondu de moins à 500°C, dans lequel la quantité de composé organique est entre 25 et 1000 parties en masse par rapport 100 parties en masse de l'oxyde, et
dans lequel la réaction de réduction se produit dans une gamme de température de plus de 300°C à 400°C.

2. Le procédé de fabrication d'une substance réduite selon la revendication 1, le procédé comprenant en outre une autre étape de réduction successive à l'étape de réduction précédemment décrite, l'autre étape de réduction comprenant le chauffage à 400°C ou plus.
